# EUROPÄISCHE PATENTSCHRIFT

(11) **EP 4 191 810 B1**
(45) Veröffentlichungstag und Bekanntmachung des Hinweises auf die Patenterteilung: **28.01.2026**
(21) Anmeldenummer: 22210196.6
(22) Anmeldetag: 29.11.2022
(51) Int. Cl.: H02G 1/12

(54) **KABELENTMANTELUNGSWERKZEUG**
CABLE STRIPPING TOOL
OUTIL DE DÉNUDAGE DE CÂBLES

(30) Priorität: 01.12.2021 DE 102021131694
(43) Veröffentlichungstag der Anmeldung: 07.06.2023
(73) Patentinhaber: Krampe Werkzeuge GmbH & Co. KG, 59387 Ascheberg (DE)
(72) Erfinder: Krampe, Stephan, 59387 Ascheberg (DE)
(74) Vertreter: Tarvenkorn, Oliver

(56) Entgegenhaltungen:
- EP-A1- 2 015 416
- DE-A1- 102018 115 487
- US-A- 3 483 617
- US-A- 4 489 490
- US-A1- 2009 013 535
- US-A1- 2013 333 224
- US-A1- 2020 192 029

## Beschreibung

Die Erfindung betrifft ein Kabelentmantelungswerkzeug mit den Merkmalen des Oberbegriffs des Anspruchs 1.

Ein solches Kabelentmantelungswerkzeug zeigt die US 4 489490 A. Durch das pendelnd gelagerte Messerelement mit einer exzentrisch zur Pendelachse ausgerichteten Messerklinge kann ein Spiralschnitt ebenso durchgeführt werden wie ein Längs- oder Rundschnitt. Der Pendelwinkel ist formschlüssig begrenzt, wobei nachteilig ist, dass die Begrenzung direkt über die Außenkanten des Messerkopfes, an dem auch die Messerklinge ausgebildet ist, erfolgt. Dadurch besteht am Kopf des Kabelentmantelungswerkzeugs ein entsprechend großer Platzbedarf.

US 2020/192029 A1 offenbart ein Kabelentmantelungswerkzeug mit einem Messerelement, das in einem Gehäuse aufgenommen ist. Das Messerelement ist aber nur in einzelnen, vorbestimmten Winkelpositionen am Gehäuse feststellbar. Eine Änderung der Art und Weise der Schnittführung, die allein durch die Bewegungsrichtung des Werkzeugs am Kabel vorgenommen wird, ist hiermit nicht möglich.

Ein weiteres Kabelentmantelungswerkzeug ist in EP 1 887 669 A2 beschrieben. Um an einem elektrischen Kabel oder einer Litze wenigstens eine isolierende Kunststoffschicht eines isolierenden Kunststoffmantels zu entfernen, wird der Kabelhaltebügel vom Grundgehäuse weg nach außen geschoben und das Kabel eingelegt. Der federbeaufschlagte Kabelhaltebügel drückt das Kabel dann gegen das oberen Ende des Grundgehäuses, an dem ein Messerkopf herausragt. Der Messerkopf ist durch einen Doppelwinkel gebildet, der sich an ein Messerelement anschließt, welches drehbar im Grundgehäuse gelagert ist. Die Schneide ist am äußeren Ende des Messerkopfes ausgebildet; sie ist damit exzentrisch zur Rotationsachse des Messerelements angeordnet. Damit kann der Messerkopf pendeln und sich in die durch einen Benutzer vorgegebene Richtung ausrichten. Wenn das Kabelentmantelungswerkzeug um die Kabelseele als Zentrum rotiert wird, wird ein Rundschnitt ausgeführt, der den Kabelmantel am ganzen Umfang aufschneidet. Die Messerschneide steht dabei senkrecht zur Kabellängsachse. Um den Kabelmantel von dem Rundschnitt ausgehend der Länge nach aufzuschneiden, führt der Benutzer das Kabelentmantelungswerkzeug längs des Kabels bis zu dessen Ende. Die pendelnd gelagerte Messerschneide folgt der geänderten Bewegung des Kabelentmantelungswerkzeugs und dreht sich um bis zu 90°, so dass es in Längsrichtung des Kabels ausgerichtet ist. Während beim Rundschnitt das Grundgehäuse als Hebel zur Verfügung steht und den Schnitt erleichtert, muss das Werkzeug bei dem folgenden Längsschnitt gezogen werden, um das Messer durch den Kabelmantel zu führen, was gerade bei dicken Kabel mit entsprechend dickwandiger Isolierung eine hohe Kraft erfordert.

Um die vom Benutzer aufzubringende Kraft beim Abisolieren dickwandiger Kabel zu reduzieren ist in DE2059187A ein Kabelentmantelungswerkzeug beschrieben, mit dem ein Spiralschnitt durchführbar ist. Hierbei wird das Kabelentmantelungswerkzeug so geführt, dass es im Wesentlichen um die Kabelseele rotiert, wobei jedoch auch ein axialer Weg längs des Kabels zurückgelegt wird. Dabei wird das Kabelentmantelungswerkzeug als Hebel genutzt, so dass ein kraftsparendes Arbeiten möglich ist. Nachteilig an diesem Werkzeug ist, dass ein gesonderter Handhebel vorgesehen ist, der auf der von der Messereinheit abgewandten Seite des Kabels angeordnet ist. Das Arbeiten bei beengten Platzverhältnissen ist damit schwierig. Außerdem erlaubt die Bauweise keinen federbeaufschlagten Kabelhaltebügel. Es ist eine feste Einstellung des Werkzeugs auf einen bestimmten Kabeldurchmesser. Wenn das Kabel im Bereich des vorgesehenen Schnitts unrund ist, ist ein Schnitt mit einer definierte Schnitttiefe nicht erzielbar.

Die Aufgabe der Erfindung besteht somit darin ein Kabelentmantelungswerkzeug der eingangs genannten Art so zu verbessern, dass damit sowohl Rund- und Längsschnitte wie auch Spiralschnitte möglich sind.

Diese Aufgabe wird durch ein Kabelentmantelungswerkzeug mit den Merkmalen des Anspruchs 1 gelöst.

Der Grundgedanke der Erfindung besteht darin, dass eine mit der Achse des Messerelements fest verbundene Steuerscheibe vorgesehen ist, die zusammen mit dem Messerkopf im Gehäuse rotieren kann. An der Steuerscheibe ist an wenigstens einer Winkelposition ein Formschlusselement vorgesehen, das in Eingriff mit oder in Anlage zu einem weiteren, gehäuseseitigen Formschlusselement zu bringen ist. Dadurch kann der Benutzer die Steuerscheibe selbst drehen, um eine vordefinierte schräge Winkelposition des Messers gegenüber der Längsachse des zu bearbeitenden Kabels vorzugeben und damit einen Spiralschnitt einzuleiten.

Vorgesehen ist auch, dass der Formschluss den Winkelbereich begrenzt, den das Messer beim Aufschneiden eines Kabelmantels einnehmen kann. Dieser Winkelbereich ist vorzugsweise so durch die Formschlusselemente vorgegeben, dass das Messer zu beiden Seiten der Längsachse der Kabeldurchführung am Kabelentmantelungswerkzeug bzw. zu beiden Seiten des dort eingelegten Kabels den gleichen Winkel einnehmen kann.

Steht das Messer auf der Winkelhalbierenden dieses eingegrenzten Winkelbereichs, kann ein Längsschnitt entlang der Kabel-Längsachse ausgeführt werden.

Die Formschlusselemente können auf einer stirnseitigen Fläche der Steuerscheibe angeordnet sein und/oder am Außenrand der Steuerscheibe.

Hat die Steuerscheibe wenigstens ein Formschlusselement am Außenrand, so kann als Formschlusselement ein Sperrelement vorgesehen sein, das den Außenrand radial von außen kontaktiert.

Ragen die Formschlusselemente hingegen von einer Stirnseite der Steuerscheibe auf, kann das gehäuseseitig angeordnete Formschlusselement ein Schieber sein, der radial verschiebbar ist und von außen zwischen die aufragenden Formschlusselemente greift, oder ein Tastelement, das normal zur Stirnseite der Steuerscheibe oder in einem stumpfen Winkel dazu ausgerichtet ist und sich bis zwischen die aufragenden Formschlusselemente erstreckt. Die Formschlusselemente auf der Steuerscheibe können auch durch Nuten oder Mulden gebildet sein, in die ein durch ein Federelement vorgespanntes Tastelement eingreift.

Bei einer erfindungsgemäßen Ausführungsform ist vorgesehen, dass die Steuerscheibe an wenigstens einer stirnseitigen Steuerfläche wenigstens ein gegenüber der Steuerfläche erhabenes Sperrsegment aufweist. Die zwischen den radialen Kanten des Sperrsegments liegende Steuerfläche wird durch ein normal zur Steuerfläche ausgerichtetes Tastelement abgetastet. Wenn das Tastelement an eine der Kanten des Sperrsegments gerät, wird die Rotation des Messerelements gestoppt. In dieser Lage steht die Schneide am Messerkopf in einem Winkel von 45° oder mehr, insbesondere in einem Winkel von 65° bis 75°, zur Längsachse des Kabels. Um den Spiralschnitt auszuführen, hält der Benutzer das Kabelentmantelungswerkzeug, so dass es sich radial von dem eingelegten Kabel nach außen erstreckt und lässt es in dieser Stellung um die Kabellängsachse rotieren. Wird die Rotationsrichtung durch den Benutzer verändert, dreht sich das Messerelement samt der Steuerscheibe, bis die andere Begrenzungskante am Tastelement anliegt. Dort ist, mit umgekehrtem Vorzeichen, der gleiche Winkel zwischen Messerkopf und Kabellängsachse vorgegeben.

Wird das Kabelentmantelungswerkzeug nicht mehr um die Kabellängsachse rotiert, sondern längs des Kabels geführt, so richtet sich das Messerelement aufgrund seines Doppelwinkels oder der doppelten Kröpfung im Messerkopf automatisch entsprechend aus, so dass das Tastelement etwa auf der Winkelhalbierenden der Steuerfläche positioniert ist.

Vorzugsweise sind an der Steuerscheibe diametral gegenüberliegend zwei gleichartige Sperrsegmente ausgebildet, so dass sich dazwischen zwei gleichartige Steuerflächen ergeben.

Weiterhin ist vorgesehen, dass das Tastelement verschiebbar im Grundgehäuse angeordnet ist und mit einer seitlich abgerundeten und/oder mit einer Fase abgeschrägten Tastfläche die Steuerfläche kontaktiert. Die Kantenhöhen an den Sperrsegmenten, die Federkraft und die Rundung bzw. Abschrägung am Tastelement sind so abgestimmt, dass das Tastelement zurückfedern und die Begrenzungskante des Sperrsegments in bestimmten Fällen überwinden kann. Das Überspringen des Sperrsegments bzw. das bewusste Positionieren des Tastelements auf dem Sperrsegment ist in folgenden Fällen vorteilhaft:
- Um einen Rundschnitt auszuführen, kann der Benutzer die Steuerscheibe bewusst vor Beginn des Schnitts drehen, bis der spürbare Widerstand des Tastelements an der nächsten Begrenzungskante überwunden ist. Das Tastelement und damit der Messerkopf sind nun nicht mehr formschlüssig auf eine bestimmte Winkelstellung bzw. eine Winkelbereich in Bezug auf die Kabellängsachse limitiert, sondern können genau rechtwinklig zur Kabellängsachse ausgerichtet sein, um den Rundschnitt auszuführen.
- Der Benutzer kann die Steuerscheibe außerdem bewusst drehen, bis der spürbare Widerstand des Tastelements an einer Begrenzungskante überwunden ist, und dann weiterdrehen, bis das Tastelement auf der dahinter liegenden, anderen Steuerfläche spürbar wieder ausfedert. Durch die bewusste Vorwahl der Steuerfläche wird die axiale Vorschubrichtung des erfindungsgemäßen Kabelentmantelungswerkzeugs beim Spiralschnitt vorgegeben. Da das Messerelement innerhalb der segmentartigen Steuerfläche pendeln kann, kann sich das Tastelement an die eine oder andere Begrenzungskante anlegen. Diese Ausrichtung innerhalb derselben Steuerfläche erfolgt selbsttätig und ist unabhängig davon, in welchem Drehsinn der Benutzer das Kabelentmantelungswerkzeug um die Kabellängsachse rotieren lässt. Die axiale Vorschubrichtung beim Spiralschnitt hängt also bei der Erfindung nicht davon ab, in welchem Drehsinn der Benutzer das Kabelentmantelungswerkzeug benutzt, sondern allein davon, welche der beiden Steuerflächen er vorab ausgewählt hat.
- Das Überspringen des Sperrsegments auf die jeweils andere Steuerfläche erfolgt zudem selbsttätig, wenn eine zu hohe Kraft auf das Messerelement ausgeübt wird. Dies ist der Fall, wenn der Benutzer nach Durchführung eines initialen Spiralschnitts das Kabelentmantelungswerkzeug plötzlich längs des Kabels führt, und zwar entgegen der vorherigen axialen Vorschubrichtung beim Spiralschnitt. Eine solche Richtungsänderung bei der Bearbeitung erfordert eine Änderung der Ausrichtung des Messerkopfes um mehr als 180°. Um jedoch über einen so großen Winkel umschwenken zu können, reicht die pendelbare Ausbildung des Messerkopfes allein nicht aus, so dass eine mit hoher Kraft durchgeführte weitere Bewegung des Kabelentmantelungswerkzeugs in Kabellängsrichtung zum Abbrechen der Messerklinge führen würde. Dadurch, dass bei der bevorzugten Ausführungsform der Erfindung das Tastelement jedoch einfedern und das Sperrsegment dadurch vorübergehend überwinden kann, kann sich der Messerkopf auch in dieser Situation ausreichend weit drehen und sich in entgegengesetzter Richtung in einer für den Längsschnitt geeigneten Weise ausrichten. Der Schnitt kann nun ausgeführt werden, wobei die andere Steuerfläche an der Steuerscheibe abgetastet wird.

Vorteilhaft ist weiterhin, wenn das Federelement des Tastelements an einem Federbasiselement abgestützt ist, das verschiebbar im Grundgehäuse angeordnet ist, wobei die Verschiebung über ein von außen bedienbares Element bewirkt werden kann. Insbesondere ist dabei vorgesehen, dass das Federbasiselement mittels eines von außerhalb des Grundgehäuses drehbaren Exzenterelements verschiebbar ist. Der Benutzer kann also einen Knauf oder ein Rändelrad drehen, so dass der Exzenter gedreht wird. Dadurch wird das Tastelement entweder in Anlage an die Steuerfläche gebracht oder freigegeben, indem der Kontakt zur Steuerfläche aufgehoben ist. Damit das Tastelement nicht durch seine Gewichtskraft auf die Steuerfläche zurückfällt, sondern unabhängig davon, wie das Kabelentmantelungswerkzeug gehalten wird, von der Steuerfläche abgehoben ist, ist vorzugsweise wenigstens ein zusätzliches Federelement vorgesehen, das entweder das Tastelement direkt oder das Federbasiselement in eine Ruhestellung führt. Wird das Federbasiselement über die Feder bewegt, dann muss dieses zugfest mit dem Tastelement verbunden sein, damit dieses nachgezogen wird. Dies kann z. B. dadurch erreicht werden, dass das Federbasiselement und das Tastelement über die beidseitig verklebte, verschweißte oder sonst wie fixierte Druckfeder miteinander verbunden sind.

Eine Messerverstelleinheit ist vorzugsweise zusätzlich vorgesehen. Darin wird das Messerelement axial verschoben, so dass die Länge des aus dem Gehäusekopf herausragenden Anteils des Messerkopfes einstellbar ist. Auch wenn die Messerverstelleinheit als solche bekannt ist, so liegt ein vorteilhafter und überraschender Nebeneffekt bei der Verwendung in dem Kabelentmantelungswerkzeug nach der Erfindung darin, dass mit der Verstellung des Messerelements auch die damit verbundene Steuerscheibe axial vorgeschoben wird. Die Druckfeder des bei der bevorzugten Ausführungsform vorgesehenen Tastelements wird folglich stärker vorgespannt, wenn der Messerkopf weiter herausgeschoben wird. Wenn also ein dickeres Kabel bearbeitet werden soll, das auch eine dickere Kunststoffisolierschicht hat, die aufgeschnitten werden muss, erhöht sich mit einem weiter ausgefahrenem Messer zugleich die Federkraft, die auf das Tastelement wirkt. Folglich erhöht sich auch die Kraft, die zum Überspringen des Sperrsegments erforderlich ist. Bei dicken Kabelisolierungen kann also mit höheren Kräften gearbeitet werden als bei dünnen Kabelisolierungen, und ein unbeabsichtigtes Überspringen wird vermieden.

Bevorzugt wird die axiale Verstellung über ein Verstellrad bewirkt, das an seinem Außenumfang mit einer rutschhemmenden Profilierung oder einem rutschhemmenden Belag versehen ist und das mit dem Außenumfang wenigstens teilweise aus dem Gehäuse ragt oder von außerhalb des Gehäuses leicht zugänglich ist.

Um eine unbeabsichtigte Verstellung des Verstellrads zu verhindern, sieht eine vorteilhafte Ausführungsform vor, dass über den Umfang verteilt eine Vielzahl von Rastmulden vorhanden sind, in die ein federbeaufschlagtes Rastelement einfedert. Für eine Verstellung muss daher die Federkraft überwunden werden, damit das Rastelement kurz ausfedert, und eine Verstellung um einen kleinen Winkel ermöglicht, bevor es wieder in einer benachbarten Rastmulde einfedert.

Die Erfindung wird nachfolgend mit Bezug auf das in den Zeichnungen dargestellte Ausführungsbeispiel näher erläutert. Die Figuren zeigen im Einzelnen:
- Fig. 1: ein halb geöffnetes Kabelentmantelungswerkzeug in seitlicher Ansicht;
- Fig. 2: das Kabelentmantelungswerkzeug gemäß Fig. 1 im Längsschnitt;
- Fig. 3: eine Schnittführung an einem Kabel mit zugehöriger Stellung der Steuerscheibe, jeweils in schematischer Darstellung;
- Fig. 4: das halb geöffnete Kabelentmantelungswerkzeug in perspektivischer Ansicht nach Umschaltung in den Spiralschnittbetrieb;
- Fig. 5: das Kabelentmantelungswerkzeug gemäß Fig. 4 im Längsschnitt;
- Fig. 6: Gehäuse- und Messerkopf in vergrößerter perspektivischer Ansicht;
- Fig. 7: das Messerelement in schematischer perspektivischer Ansicht;
- Fig. 8, 9: mögliche Schnittführungen an einem Kabel, jeweils in schematischer Darstellung;
- Fig. 10: das halb geöffnete Kabelentmantelungswerkzeug in perspektivischer Ansicht gemäß Figur 4, mit verdrehter Steuerscheibe;
- Fig. 11: eine zweite Ausführungsform eines Messerelements in Draufsicht;
- Fig. 12: eine dritte Ausführungsform eines Messerelements in Draufsicht; und
- Fig. 13: das halb geöffnete Kabelentmantelungswerkzeug, in perspektivischer Ansicht von schräg hinten.

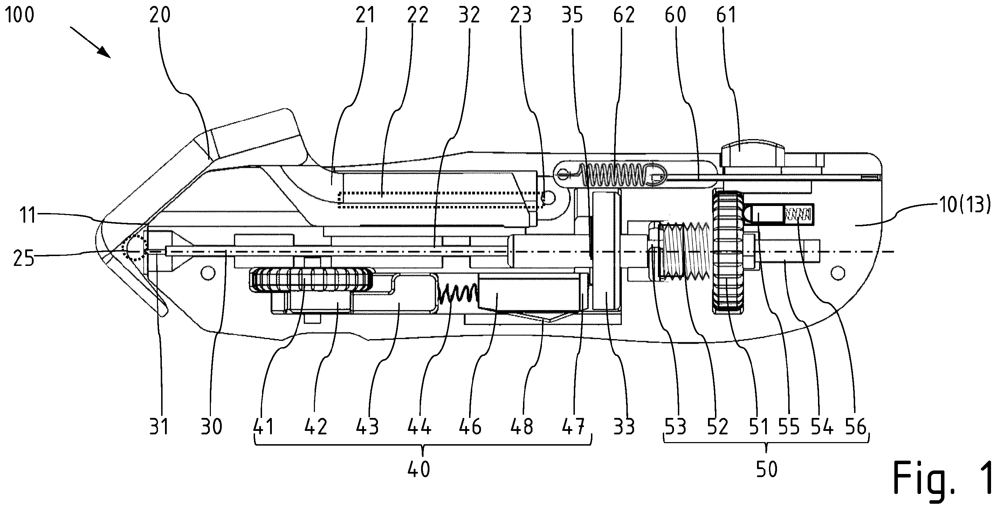

In Figur 1 ist ein Kabelentmantelungswerkzeug 100 nach der Erfindung dargestellt. Sein Gehäuse 10 ist aus zwei Halbelementen gebildet, wobei in Figur 1 nur ein Gehäusehalbelement 13 dargestellt ist und das andere entfernt, ist, um den Blick auf die Innenseite freizugeben.

Die in Figur 1 dargestellte, bevorzugte Ausführungsform des Kabelentmantelungswerkzeugs 100 enthält außerdem folgende wesentliche Baugruppen:
- einen gegenüber dem Gehäuse 10 verschiebbaren Kabelhaltebügel 20 mit einer Kabeldurchführung 25,
- eine Schnittsteuerungseinheit 40,
- eine Messerverstelleinheit 50 und
- ein Zusatzmesser 60.

In dem Gehäuse 10 ist ein Messerelement 30 drehbar gelagert, das aus einem Runddraht gebildet ist und daher eine metallische, zylindrische Achse 32 umfasst, die sich von einem Gehäusekopf 11 aus tief bis in das Gehäuse 10 erstreckt. Im Bereich des Gehäusekopfes 11 ist ein Messerkopf ausgebildet. Das freie Ende des Messerkopfes ist mit einer Messerklinge 31 versehen bzw. als Messerklinge 31 angeschliffen.

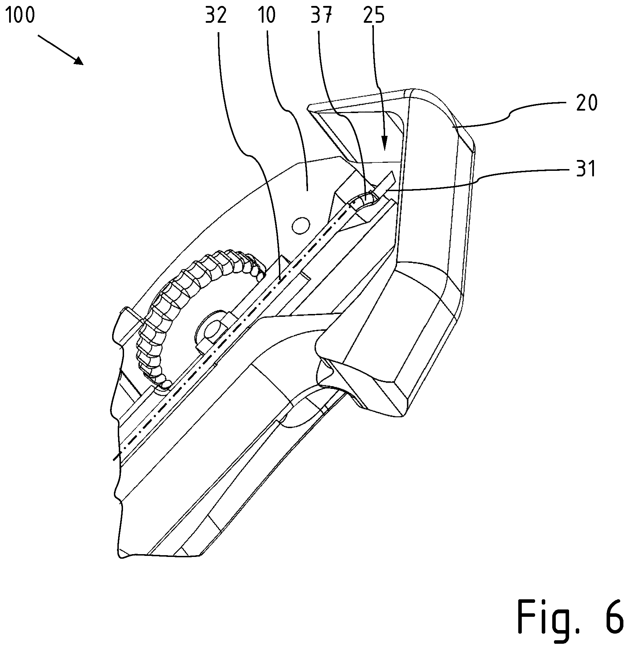

Wie die Vergrößerung in Figur 6 zeigt, ist die Achse 32 am Ende doppelt gekröpft bzw. als Doppelwinkel 37 ausgeführt, so dass die Messerklinge 31 versetzt parallel zur Achse 32 angeordnet ist; somit rotiert die Messerklinge 31 exzentrisch in Bezug auf die Achse 32.

Der Kabelhaltebügel 20 ist in Figur 1 an den Gehäusekopf 11 herangezogen. Er erstreckt sich über den Gehäusekopf 11, aus dem der Messerkopf 31 teilweise herausragt, hinweg. Er ist mit einer Schiebelasche 21 verschiebbar im Grundgehäuse 10 gelagert und über eine Zugfeder 22 an einem Zugfederlager 23 aufgehängt. Die Zugfeder 22 ist innerhalb der Schiebelasche 21 aufgenommen, wodurch eine platzsparende Bauweise möglich ist. Durch Vorschieben des Kabelhaltebügels 20 wird die Kabeldurchführung 25 vergrößert. Der federbeaufschlagte Kabelhaltebügel 20 zieht dann ein in die Kabeldurchführung 25 eingelegtes Kabel gegen den Gehäusekopf 11 und die Messerklinge 31.

Die Bauweise bietet unterhalb des Kabelhaltebügels 20 Platz für ein Zusatzmesser 60. Dieses kann über einen Schieber 61 aus dem Gehäuse 10 herausgeschoben werden, wobei eine Zugfeder 62 gespannt wird, die das Zusatzmesser 60 nach Gebrauch wieder zurückzieht.

Im unteren Bereich des Gehäuses 10 ist eine Messerverstelleinheit 50 angeordnet. Diese besteht aus einem randseitig mit einer Rändelfläche aus dem Gehäuse 10 herausragenden Verstellrad 51, das zum einen mit einer Achse 54 im Gehäuse 10 gelagert ist und außerdem mit einem Stützelement 52 verbunden ist, an dem das Messerelement 30 während des Abisoliervorgangs abgestützt ist.

Damit das Messerelement 30 nicht am Gehäusekopf 11 herausrutschen kann, ist es am unteren Ende mit einem Zusatzelement oder einer Verdickung versehen, mit der es in eine sich radial öffnende Kopplungsausnehmung 53 in dem Stützelement 52 eingeschoben ist. Damit ist das Messerelement 30 in axialer Richtung formschlüssig am Stützelement 52 festgelegt, kann aber unabhängig davon rotieren. Das Stützelement 52 ist mit einem Außengewinde versehen, mit dem es in einem Innengewinde im Gehäuse 10 aufgenommen ist. Durch Drehen am Verstellrad 51 ändert sich also die axiale Position der Kopplungsausnehmung 53 im Gehäuse 10, so dass die Achse 32 vor- oder zurückbewegt wird und die Messerklinge 31 mehr oder weniger aus dem Gehäusekopf 11 hervorragt. Damit kann die Schnitttiefe eingestellt werden.

Wesentliche Bestandteile der bevorzugten Ausführungsform des Kabelentmantelungswerkzeugs 100 sind eine mit dem Messerelement 30 verbundene Steuerscheibe 33 mit zwei Steuerflächen 34 und zwei Sperrsegmenten 35 sowie eine Schnittsteuerungseinheit 40.

Die Schnittsteuerungseinheit 40 umfasst ein Umschaltelement 41, das randseitig mit einer Rändelfläche aus dem Gehäuse 10 herausragt und mit einem Exzenterelement 42 verbunden ist. Das Exzenterelement 42 wirkt auf ein Federbasiselement 43, in dem in einer Bohrung eine Druckfeder 44 aufgenommen ist, die sich bis in eine Bohrung an einem Tastelement 46 erstreckt. Die Druckfeder 44 ist beidseitig in den Bohrungen festgelegt, z.B. verklebt. Das Tastelement 46 besitzt seitlich eine Führungsnocke 48 zur exakten linearen Führung in einer Nut im Gehäuse 10 und besitzt weiterhin an seinem unteren Ende eine Tastfläche 47. In der in Figur 1 gezeigten Stellung berührt die Tastfläche 47 die Steuerscheibe 33 nicht, so dass das Messerelement 30 frei drehbar ist. Die Messerklinge 31 am Messerkopf kann daher frei pendeln, so dass der Benutzer damit je nach der Richtung, in der er das Kabelentmantelungswerkzeug 100 am Kabel führt, Rund- und Längsschnitte daran ausführen kann.

Ein Schnäpper ist durch ein in einer Sackbohrung geführtes Rastelement 55 mit einem halbkugelförmigen Kopf gebildet, das durch eine Druckfeder 56 gegen eine Stirnseite des Verstellrads 51 gedrückt wird.

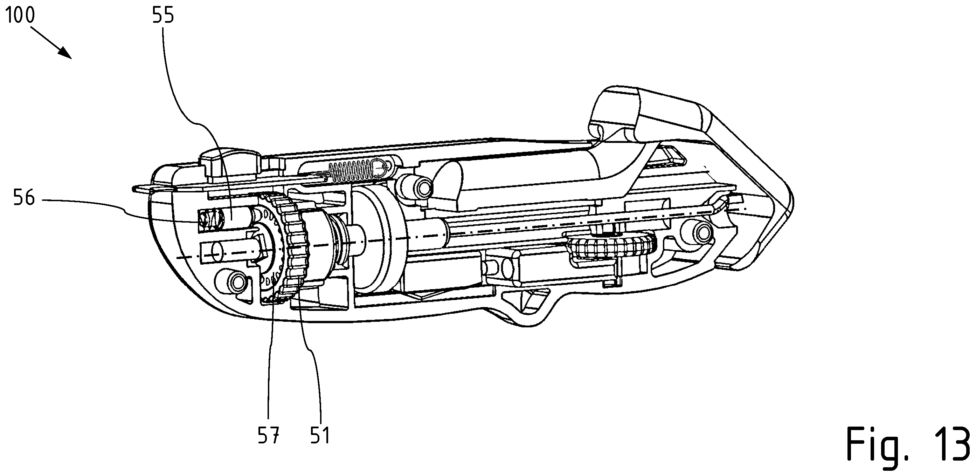

Wie die perspektivische Ansicht in Figur 13 auf das halb geöffnete Kabelentmantelungswerkzeug 100 von schräg hinten zeigt, besitzt das Verstellrad 51 an der dem Rastelement 55 zugewandten Seite ein oder mehrere muldenartige Vertiefungen 57, in die das federnd gelagerte Rastelement 55 einrückt. Dadurch gibt es für den Benutzer eine haptische Rückkopplung über die Stellung des Verstellrads 51 und die Winkellage des Verstellrads 51 wird durch den Schnäpper gesichert.

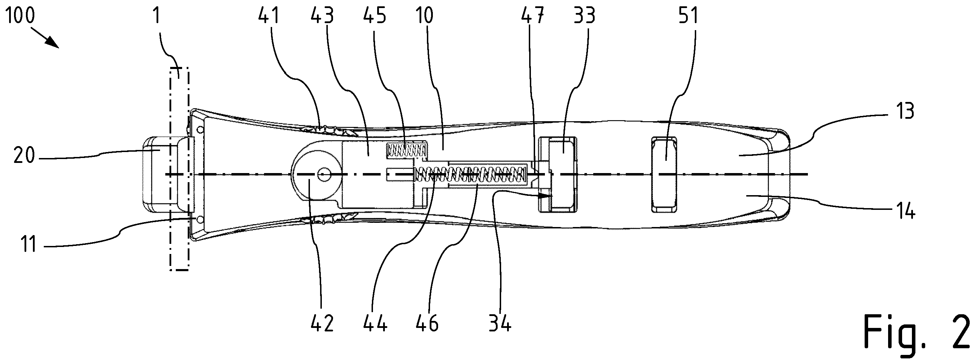

Fig. 2 zeigt das Kabelentmantelungswerkzeug 100 im Längsschnitt. Beide Halbelemente 13, 14 des Gehäuses 10 sind hier zusammengefügt. In der Darstellung ist insbesondere die Stellung des Exzenterelements 42 gut erkennbar, aus der die Positionen des Federbasiselements 43, der Druckfeder 44 und des Tastelements 46 mit seiner Tastfläche 47 folgen. Die Tastfläche 47 ist beidseitig mit einer Fase angeschrägt und/oder seitlich abgerundet, wobei der Rundungsradius und/oder die Höhe der Fase größer als die Höhe der zwischen dem Sperrsegment 35 und der angrenzenden Steuerfläche 34 ausgebildeten Begrenzungskante 35.1 ist. Dadurch kann das Tastelement 46 auf das Sperrsegment 35 aufgleiten.

Eine weitere Druckfeder 45 ist zwischen dem Gehäuse 10 und dem Federbasiselement 43 eingesetzt. Über das Federbasiselement 43 und die Druckfeder 44 wird das Tastelement 46 von der Steuerscheibe 33 weggedrückt, so dass er nicht in Kontakt damit gerät.

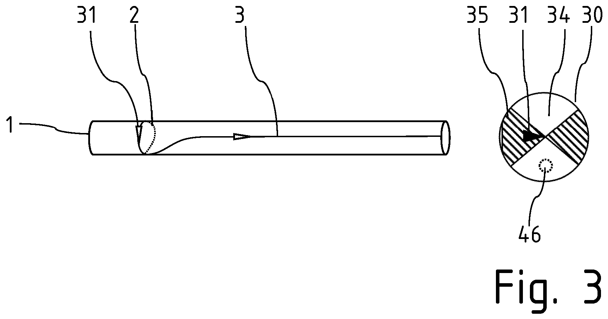

Figur 3 zeigt schematisch die Arbeitsweise mit dem Kabelentmantelungswerkzeug 100 in der Betriebsweise gemäß den Figuren 1 und 2, bei der das Tastelement 46 nicht in Kontakt mit der Steuerscheibe 33 ist oder in anderer Weise ungehindert von den Sperrsegmenten 35 liegt. Das Kabelentmantelungswerkzeug 100 kann benutzt werden, um in bekannter Weise Rundschnitte 2 und Längsschnitte 3 an einem Kabel 1 auszuführen. Die jeweilige Position und Ausrichtung der Messerklinge 31 am Messerkopf dabei ist jeweils durch die Dreiecke markiert.

Direkt neben der schematischen seitlichen Abbildung eines Abschnitts eines Kabels 1 ist eine Draufsicht auf die Steuerscheibe 33 des Messerelements 30 während der Ausführung des Längsschnitts 3 dargestellt. Die Messerklinge 31 ist etwa auf der Winkelhalbierenden des linken Sperrsegments 35 ausgerichtet. Das Tastelement 46 liegt nicht an einer der Begrenzungskanten 35.1 eines Sperrsegments 35 an.

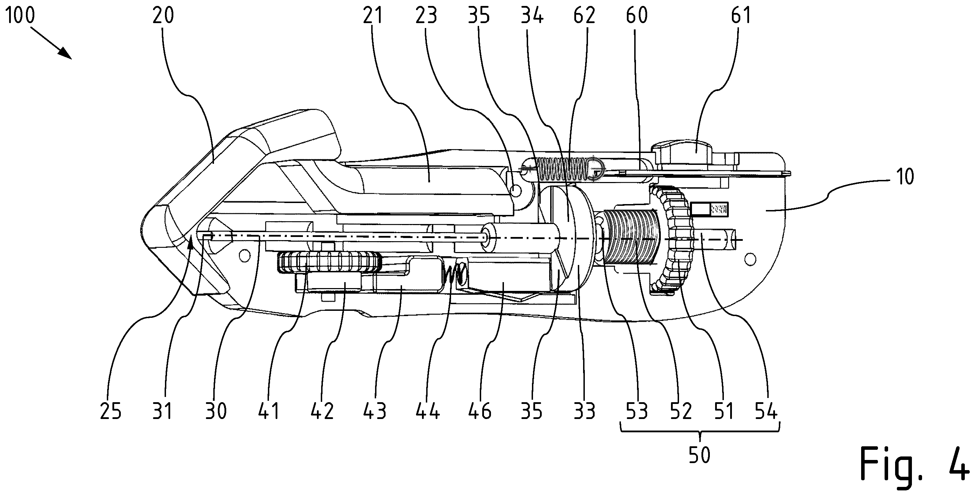

Fig. 4 zeigt das halb geöffnete Kabelentmantelungswerkzeug 100 in perspektivischer Ansicht. Hierbei wurde eine Umschaltung in den Spiralschnittbetrieb vorgenommen, indem das Umschaltelement 41 gedreht worden ist. Dadurch schiebt das Exzenterelement 42 das Federbasiselement 43 mit der Druckfeder 44 und dem Tastelement 46 in Richtung der Steuerscheibe 33. Infolgedessen liegt die Tastfläche 47 an der Oberfläche der Steuerscheibe 33 an, und zwar an einer vertieft zwischen zwei Sperrsegmenten 35 liegenden Steuerfläche 34. Der Pendelwinkel des mit der Steuerscheibe 33 verbundenen Messerelements 30 ist dadurch begrenzt, dass an den Begrenzungen 33 der Steuerfläche 34 ein Anschlag des axial verschiebbaren, aber ansonsten ortsfest im Gehäuse 10 angeordneten Tastelements 46 erfolgt.

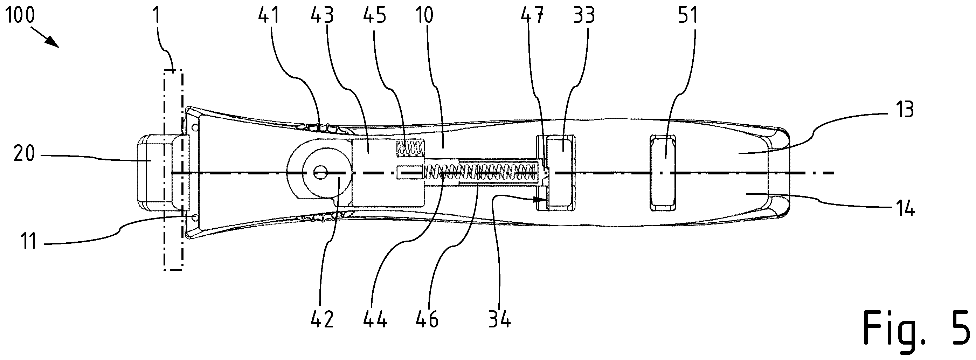

In Figur 5 ist das Kabelentmantelungswerkzeug 100 in einem zu Fig. 2 analogen Längsschnitt gezeigt. Das Exzenterelement 42 ist nun auf die Seite des Federbasiselements 43 geschwenkt und drückt über das Federbasiselement 43 und die Druckfeder 44 das Tastelement 46 auf eine Steuerfläche 34 der Steuerscheibe 33.

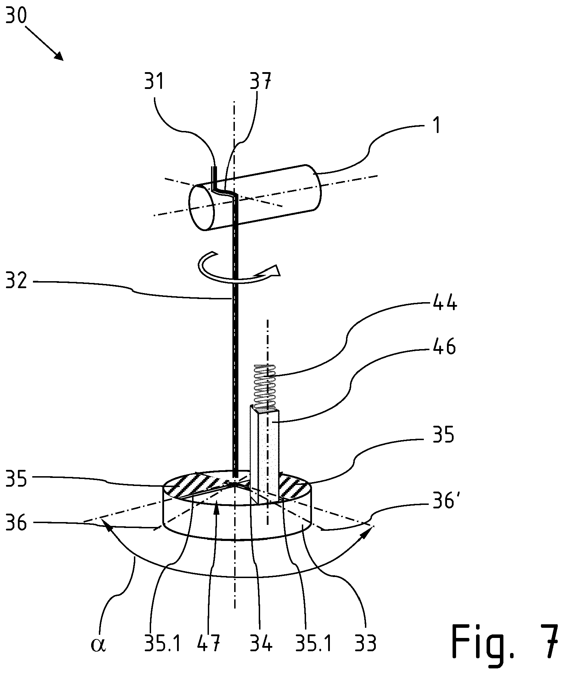

Die Funktionsweise im Spiralschnittbetrieb wird anhand der schematischen perspektivischen Darstellung des Messerelements 30 in Figur 7 erläutert:
Das Messerelement 30 und die damit fest verbundene Steuerscheibe 33 rotieren um die Achse 32. Durch die in Figur 7 stark überzeichnete doppelte Kröpfung bzw. den Doppelwinkel 37 am Messerkopf ist die Messerklinge 31 versetzt parallel zu der Achse 32 angeordnet. Das im Gehäuse angeordnete Tastelement 46 liegt mit seiner Tastfläche 47 auf der Steuerfläche 34 auf und liegt rechts an der Begrenzungskante zu dem etwas über die Steuerfläche 34 erhabenen Sperrsegment 35 an. Eine vom Tastelement 46 ungehinderte Bewegung der Steuerscheibe 33 ist nur zwischen den Begrenzungskanten 35.1 der Sperrsegmente 35 und damit innerhalb des Öffnungswinkels α der Steuerfläche 34 möglich. Der Öffnungswinkel α beträgt vorzugsweise zwischen 100° und 160°.

Da noch die räumliche Ausdehnung des Tastelements 46 auf der Steuerfläche 34 berücksichtigt werden muss, ist der mögliche Arbeitswinkel für den Messerkopf 37 noch weiter begrenzt und immer kleiner als der Öffnungswinkel α der Steuerfläche 34. Die Begrenzungslinien 36, 36' markieren also die maximal mögliche Ausrichtung der Messerklinge 31 beim Schneiden eines Kabelmantels und die zugehörige Stellung des Tastelements 46. Der für die Messerkopfverstellung nutzbare Arbeitswinkel zwischen den Begrenzungslinien 36, 36' beträgt vorzugsweise zwischen 90° und 150°.

Nicht nur die Weite des Arbeitswinkels, sondern auch die absolute Winkellage der Messerklinge 31 in Bezug auf die Längsachse eines Kabels 1 muss bei den Begrenzungslinien 36, 36' vorgegeben sein. Dies wird durch die Ausrichtung des Doppelwinkels 37 am Messerkopf gegenüber der Steuerscheibe 33 erreicht. Bei der in den Figuren dargestellten Ausführungsform eines Kabelentmantelungswerkzeugs 100 ist das Tastelement 46 genau seitlich neben der Mittelachse der Kabeldurchführung 25 angeordnet, so dass folglich der Doppelwinkel 37 des Messerkopfes, und damit die Messerklinge 31, genau in der Mitte eines der Sperrsegmente 35 positioniert ist. Je nach Lage des Tastelements 46 im Gehäuse kann die Positionierung an der Steuerscheibe 33 aber unterschiedlich sein.

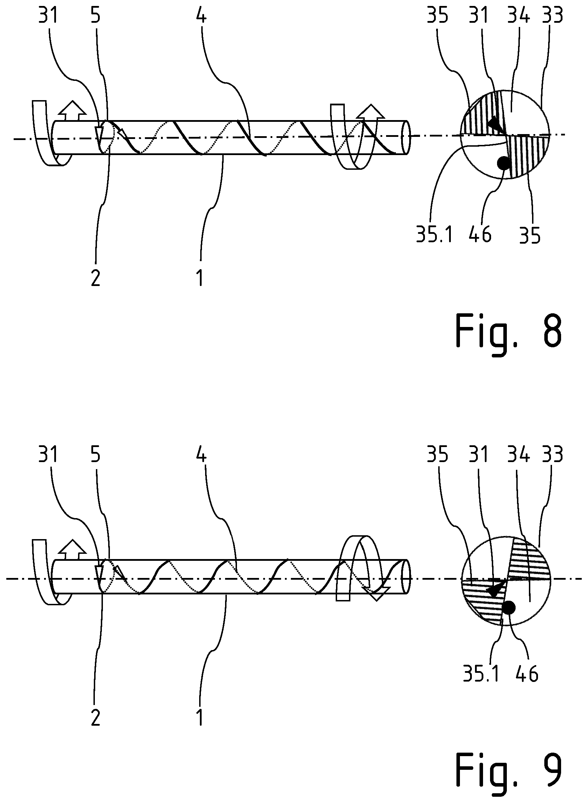

Figur 8 zeigt schematisch die Arbeitsweise an einem Kabel 1. Zunächst wird ein Rundschnitt 2 ausgeführt. Sobald der Rundschnitt 2 um 360° vollzogen wurde und sich die Messserklinge 31 wieder am Punkt 5 befindet, erfolgt die Umschaltung in den Spiralschnittbetrieb.

Das Kabelentmantelungswerkzeug 100 wird anschließend weiterhin in gleichem Drehsinn um die Kabellängsachse rotiert, wie beim Rundschnitt 2 auch. Die mögliche Rotationsrichtung des Kabelentmantelungswerkzeugs 100 ist durch die Blockpfeile angezeigt. Durch die ständige Schrägstellung der Messerklinge 31 in Bezug auf die Kabellängsachse wird das Kabelentmantelungswerkzeug 100 mit der Rotation zugleich auch axial vorwärtsbewegt, so dass ein Spiralschnitt 4 erzeugt wird. Bei einer Hauptbewegungsrichtung des Kabelentmantelungswerkzeugs von links nach rechts, wurden sowohl der Rundschnitt 2 wie auch der Spiralschnitt 4 durch eine Rotation des Werkzeugs im Uhrzeigersinn durchgeführt, wie durch die seitlichen Blockpfeile angedeutet.

Die Draufsicht auf die Steuerscheibe 33 des Messerelements 30 daneben zeigt, dass die Messerklinge 31 schräg zur Kabellängsachse ausgerichtet ist und das Tastelement 46 formschlüssig an der Begrenzungskante 35.1 des rechten Sperrsegments 35 anliegt.

Fig. 9 zeigt noch einmal schematisch die Arbeitsweise an einem Kabel 1. Zunächst wird wieder ein Rundschnitt 2 ausgeführt. Sobald der Rundschnitt 2 um 360° vollzogen wurde und sich die Messerklinge 31 wieder am Punkt 5 befindet, erfolgt die Umschaltung in den Spiralschnittbetrieb.

Das Kabelentmantelungswerkzeug 100 wird anschließend beim Spiralschnitt 4 in einem anderen Drehsinn um die Kabellängsachse rotiert als beim vorherigen Rundschnitt 2. Die Rotationsrichtungen des Kabelentmantelungswerkzeugs 100 bei Rund- und Spiralschnitt sind durch die Blockpfeile angezeigt.

Die Draufsicht auf die Steuerscheibe 33 daneben zeigt, dass die Messerklinge 31 wieder schräg zur Kabellängsachse ausgerichtet ist. Allerdings hat sich die Messerklinge 31 samt Steuerscheibe 33 aufgrund der Umkehrung der Arbeitsrichtung gegenüber der Stellung in Figur 8 gedreht. Das Tastelement 46 hat die Steuerfläche34 überstrichen und liegt nun formschlüssig an der Begrenzungskante 35.1 des linken Sperrsegments 35 an.

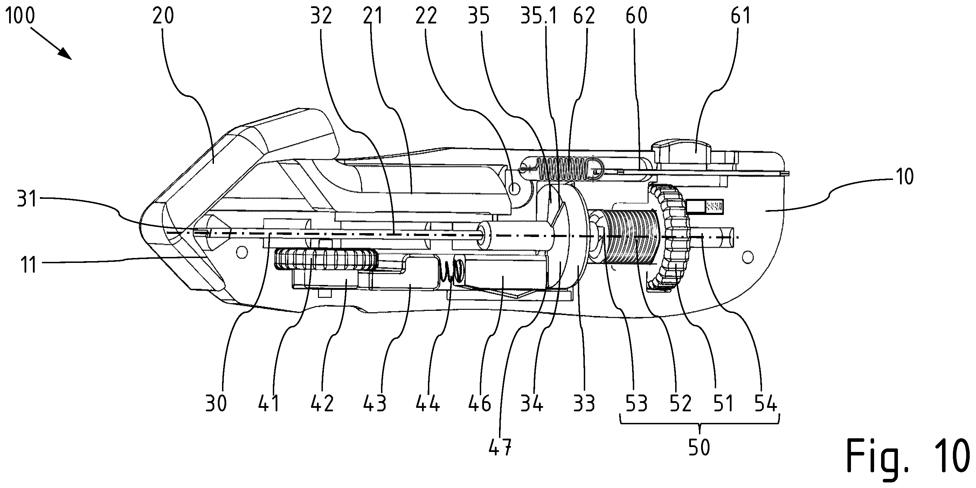

Fig. 10 zeigt das halb geöffnete Kabelentmantelungswerkzeug 100 in der gleichen perspektivischen Ansicht wie in Figur 4. Der einzige Unterschied im Vergleich zur Darstellung in Fig. 4 besteht in der Stellung der Steuerscheibe 30. Die Steuerscheibe 33 ist so weit verdreht, dass das Tastelement 46 sich nun nicht mehr mit seiner Tastfläche 47 auf einer der Steuerflächen 34 befindet, sondern auf dem unteren Sperrsegment 35 aufliegt.

Da das Tastelement 46 federbeaufschlagt ist und die Tastfläche 47 seitlich angeschrägt ist, wie in den Figuren 4 und 10 zu erkennen ist, und da außerdem eine Begrenzungskante 35.1 des Sperrsegments 35 nur etwa 0,3 mm bis 1 mm über die Steuerfläche 34 aufragt, ist es möglich, dass das Tastelement 46 etwas einfedert und die Begrenzungskante 35.1 des Sperrsegments 35 überwindet. Das Tastelement 46 gleitet jedoch nur dann auf das Sperrsegment 35 auf, wenn der Benutzer die Steuerscheibe 33 zur Vorwahl der Arbeitsrichtung bewusst verdreht hat oder wenn das über den Messerkopf auf die Steuerscheibe 33 ausgeübte Drehmoment hoch genug ist; in letzterem Fall wird durch die selbsttätige Verdrehung eine Beschädigung der Messerklinge 31 verhindert.

Das Tastelement 46 überwindet im Anschluss an die Stellung gemäß Figur 10 das Sperrsegment 35 wieder und taucht aufgrund seiner Federbeaufschlagung dahinter an der anderen Steuerfläche 34 ab, so dass die Tastfläche 47 die andere Steuerfläche 34 berührt und der Spiralschnitt in der oben beschriebenen Weise, aber mit anderer axialer Vorschubrichtung, ausgeführt werden kann.

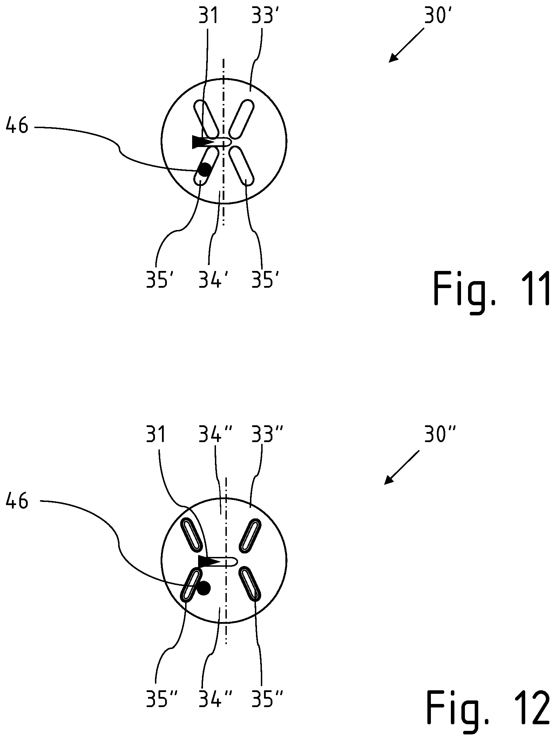

Figur 11 zeigt eine alternative Ausführungsform einer Steuerscheibe 33'. Diese besitzt zur formschlüssigen Begrenzung des Arbeitswinkels der Messerklinge 31 insgesamt vier Nuten als Formschlusselemente 35'. Das federbeaufschlagte Tastelement 46 kann dort jeweils einfedern, so dass an diesen Positionen die Messerstellung beim Spiralschnitt gehalten wird. Der Benutzer kann beim Spiralschnitt die passende Stellung für die von ihm gewünschte Rotationsrichtung des Kabelentmantelungswerkzeugs 100 und die gewünschte axiale Vorschubrichtung am Kabel vorwählen. Er kann auch eine Zwischenstellung wählen, bei der das Tastelement 46 zwischen den Formschlusselementen 35' an der Steuerscheibe 33' positioniert ist, um Rund- oder Längsschnitte auszuführen.

Figur 12 zeigt eine weitere alternative Ausführungsform einer Steuerscheibe 33". Diese besitzt zur formschlüssigen Begrenzung des Arbeitswinkels des Messerelements 37 insgesamt vier aufragende stegförmige Wülste als Formschlusselement 35", die jeweils randseitig abgeschrägt sind. Das federbeaufschlagte Tastelement 46 legt sich dort jeweils an, so dass die Messerstellung beim Spiralschnitt gehalten wird. Der Vorteil bei dieser Ausführungsform der Steuerscheibe 33". besteht darin, dass ebenfalls, wie bei der anhand der Figuren 1 bis 10 beschriebenen, ersten Ausführungsform, das freie Pendeln über eine zwischen den Formschlusselementen 35" ausgebildete Steuerfläche 34" möglich ist. Damit richtet sich die Messerklinge 31 selbsttätig aus, wenn der Benutzer die Rotationsrichtung des Kabelentmantelungswerkzeugs 100 gegenüber der Kabellängsachse umdreht (siehe Figur 9). Der Vorteil besteht darin, dass eine definierte Stellung für einen Längsschnitt formschlüssig gehalten wird, wenn das Tastelement 46" jeweils zwischen einem Paar von nah beieinander Formschlusselementen 35" auf der linken oder rechten Seite positioniert ist, also auf der 3-Uhr-Stellung oder der 9-Uhr-Stellung in Figur 12.

Der einzige Nachteil gegenüber der ersten beschriebenen Ausführungsform einer Steuerscheibe 30 mit ausgefüllten, erhabenen Sperrsegmenten 35 besteht darin, dass hier bei einer plötzlichen vom Benutzer veranlassten Umkehr der axialen Vorschubrichtung keine selbsttätige Neuausrichtung der Messerklinge 31 erfolgen kann, da der Tastkopf 46 nach Überwindung des ersten Formschlusselements 35" an dem nächstdahinter liegenden Formschlusselement 35" gestoppt wird, so dass eine zweite Steuerfläche 34" auf der anderen Seite der Steuerscheibe 33 nicht ohne Benutzereingriff erreicht wird.

### Bezugszeichen

- 1: Kabel
- 2: Rundschnitt
- 3: Längsschnitt
- 4: Spiralschnitt
- 5: Umschaltpunkt

- **100**: **Kabelentmantelungswerkzeug**

- **10**: **Grundgehäuse**
- 11: Gehäusekopf
- 13, 14: Gehäusehalbelemente
- **20**: **Führungsbügel**
- 21: Schiebelasche
- 22: Zugfeder
- 23: Zugfederlager
- 25: Kabeldurchführung
- **30**: **Messerelement**
- 31: Messerklinge
- 32: Achse
- 33, 33', 33": Steuerscheibe
- 34, 34', 34": Steuerfläche
- 35: Sperrsegment
- 35.1: Begrenzungskante
- 35', 35": Formschlusselemente
- 36, 36': Begrenzungslinien
- 37: Doppelwinkel
- **40**: **Schnittsteuerungseinheit**
- 41: Umschaltelement
- 42: Exzenterelement
- 43: Federbasiselement
- 44: Druckfeder
- 45: Druckfeder
- 46: Tastelement
- 47: Tastfläche
- 48: Führungsnocke
- **50**: **Messerverstelleinheit**
- 51: Verstellrad
- 52: Stützelement
- 53: Kopplungsausnehmung
- 54: Achse
- 55: Rastelement
- 56: Druckfeder
- 57: Vertiefungen
- **60**: **Zusatzmesser**
- 61: Schieber
- 62: Zugfeder

## Patentansprüche

1. Kabelentmantelungswerkzeug (100) mit wenigstens:
- einem Gehäuse (10), in dem ein Messerelement (30; 30'; 30") angeordnet ist, das mit einem Messerkopf mit einer Messerklinge (31) aus einem Gehäusekopf (11) des Gehäuses (10) herausragt und das drehbar im Gehäuse (10) gelagert ist; wobei die Messerklinge (31) exzentrisch in Bezug auf die Rotationsachse des Messerelements (30; 30'; 30") angeordnet ist und pendelnd um die Rotationsachse beweglich ist;
- einem Kabelhaltebügel (20), der verschiebbar im Gehäuse (10) gelagert ist und der sich über den Gehäusekopf (11) des Gehäuses (10) mit dem Messerkopf hinweg erstreckt, wobei zwischen dem Kabelhaltebügel (20) und dem Gehäusekopf (11) eine das zu bearbeitende Kabel (1) wenigstens teilweise umgreifende Kabeldurchführung (25) ausgebildet ist,
wobei:
- das Messerelement (30; 30'; 30") fest mit einer im Gehäuse (10) drehbaren Steuerscheibe (33; 33'; 33") verbunden ist und
- eine Pendelbewegung des pendelbar gelagerte Messerkopfes mit der Messerklinge (31) gegenüber der Kabeldurchführung (25) über eine Schnittsteuerungseinheit zwischen einer freien, einen Längs- und Rundschnitt ermöglichenden Pendelbewegung und einem zur Durchführung eines Spiralschnitts eingegrenzten Pendelwinkelbereich umschaltbar ist,
- der Pendelwinkelbereich über wenigstens je ein Formschlusselement am Gehäuse (10) und an oder auf der Steuerscheibe (33; 33'; 33"), welche Formschlusselemente in Eingriff miteinander oder in Anlage aneinander zu bringen sind, einstellbar und/oder begrenzbar ist, **dadurch gekennzeichnet,**
- **dass** als Formschlusselement im Gehäuse (10) wenigstens ein Tastelement (46) vorgesehen ist, das die Steuerscheibe (33; 33'; 33") kontaktiert und
- **dass** an oder auf der Steuerscheibe (33; 33'; 33") wenigstens zwei zueinander beabstandete Formschlusselemente (35'; 35") oder Begrenzungskanten (35.1) vorgesehen sind, zwischen denen eine von dem Tastelement (46) überstreichbare, sektorförmige Steuerfläche (34; 34'; 34") ausgebildet ist.

2. Kabelentmantelungswerkzeug (100) nach Anspruch 1, **dadurch gekennzeichnet, dass** wenigstens ein Formschlusselement am Außenumfang der Steuerscheibe (33; 33'; 33") ausgebildet ist.

3. Kabelentmantelungswerkzeug (100) nach Anspruch 1 oder 2, **dadurch gekennzeichnet, dass** wenigstens ein Formschlusselement (35'; 35") auf einer Stirnfläche der Steuerscheibe (33; 33'; 33") ausgebildet oder angeordnet ist.

4. Kabelentmantelungswerkzeug (100) nach wenigstens einem der vorhergehenden Ansprüche, **dadurch gekennzeichnet, dass** an der Steuerscheibe (33; 33'; 33") zwei diametral gegenüberliegende Steuerflächen (34; 34'; 34") und/oder jeweils zwei diametral gegenüberliegende Sperrsegmente (35) ausgebildet sind.

5. Kabelentmantelungswerkzeug (100) nach wenigstens einem der vorhergehenden Ansprüche, **dadurch gekennzeichnet, dass** die Steuerfläche (34) beidseits durch je eine gegenüber der Steuerfläche (34) erhabene, radiale Begrenzungskante (35.1) eines Sperrsegments (35) begrenzt ist.

6. Kabelentmantelungswerkzeug (100) nach einem der Ansprüche 1 bis 5, **dadurch gekennzeichnet, dass** das Formschlusselement (35') an der Steuerscheibe (33') eine Vertiefung ist.

7. Kabelentmantelungswerkzeug (100) nach einem der Ansprüche 1 bis 5, **dadurch gekennzeichnet, dass** das Formschlusselement (35") an der Steuerscheibe (33") eine Erhöhung ist.

8. Kabelentmantelungswerkzeug (100) nach einem der Ansprüche 1 bis 7, **dadurch gekennzeichnet,**
- **dass** das Tastelement (46) zumindest in einer Spiralschnittstellung verschiebbar im Gehäuse (10) angeordnet ist und
- **dass** das Tastelement (46) über wenigstens ein Federelement (44) vorgespannt und dessen Tastfläche (47) an die Steuerfläche (34; 34'; 34") angelegt ist.

9. Kabelentmantelungswerkzeug (100) nach Anspruch 8, **dadurch gekennzeichnet, dass** das Federelement (44) des Tastelements (46) eine Druckfeder ist, die an einem Federbasiselement (43) abgestützt ist, das verschiebbar im Gehäuse (10) angeordnet ist.

10. Kabelentmantelungswerkzeug (100) nach Anspruch 9, **dadurch gekennzeichnet, dass** das Federbasiselement (43) mittels eines von außerhalb des Gehäuses (10) drehbaren Exzenterelements (42) in die Spiralschnittstellung verschiebbar ist.

11. Kabelentmantelungswerkzeug (100) nach einem der Ansprüche 6 bis 10, **dadurch gekennzeichnet,**
- **dass** das Tastelement (46) an seiner Tastfläche (47) seitlich abgerundet und/oder mit einer Fase abgeschrägt ist und
- **dass** der Rundungsradius und/oder die Höhe der Fase größer als die Höhe der zwischen dem Sperrsegment (35) und der angrenzenden Steuerfläche (34; 34'; 34") ausgebildeten Begrenzungskante (35.1) ist.

12. Kabelentmantelungswerkzeug (100) nach einem der vorhergehenden Ansprüche, **dadurch gekennzeichnet, dass** das Messerelement (30; 30'; 30") aus einem Runddraht gebildet ist, wobei der Messerkopf durch einen doppelt abgewinkelten Abschnitt gebildet ist, an dessen Ende der angeschliffene Runddraht eine Messerklinge (31) ausbildet.

13. Kabelentmantelungswerkzeug (100) nach einem der vorhergehenden Ansprüche, **dadurch gekennzeichnet, dass** eine Messerverstelleinheit (50) vorgesehen ist, die ein aus dem Gehäuse (10) herausragendes Verstellrad (51) umfasst, das über eine Achse (54) drehbar im Gehäuse (10) gelagert ist und das mit einem Stützelement (52) verbunden ist, an dem das Messerelement (30) abgestützt ist, wobei das Verstellrad (51) ein oder mehrere muldenartige Vertiefungen (57) aufweist, in welche ein federnd im Gehäuse (10) gelagertes Rastelement (55) einrückt.

## Claims

1. Cable stripping tool (100) comprising at least:
- a housing (10), in which a cutter element (30; 30'; 30") is arranged, which protrudes with a cutter head with a cutter blade (31) from a housing head (11) of the housing (10) and which is mounted rotatably in the housing (10); wherein the cutter blade (31) is arranged eccentrically with respect to the axis of rotation of the cutter element (30; 30'; 30") and is movably pendulously about the axis of rotation;
- a cable holding bracket (20), which is mounted displaceably in the housing (10) and which extends beyond the housing head (11) of the housing (10) with the cutter head, wherein a cable passage (25) at least partially surrounding the cable (1) to be processed is formed between the cable holding bracket (20) and the housing head (11),
wherein:
- the cutter element (30; 30'; 30") is firmly connected to a control disc (33; 33'; 33") rotatable in the housing (10), and
- a pendulum movement of the pendulous cutter head with the cutter blade (31) relative to the cable passage (25) can be switched via a cut control unit between a free pendulum movement allowing longitudinal and round cuts and a pendulum angular range restricted for making a spiral cut,
- the pendulum angular range is adjustable and/or delimitable via at least one form-fitting element in each case on the housing (10) and at or on the control disc (33; 33'; 33"), which form-fitting elements are to be brought into engagement with one another or into abutment against one another,
**characterized**
- **in that** at least one feeler element (46) is provided as form-fitting element in the housing (10) and contacts the control disc (33; 33'; 33"), and
- **in that** at least two form-fitting elements (35;' 35") or delimiting edges (35.1) spaced apart from one another are provided at or on the control disc (33; 33'; 33"), between which a sector-shaped control face (34; 34'; 34") can be passed over by the feeler element (46).

2. Cable stripping tool (100) according to Claim 1, **characterized in that** at least one form-fitting element is formed on the outer circumference of the control disc (33; 33'; 33").

3. Cable stripping tool (100) according to Claim 1 or 2, **characterized in that** at least one form-fitting element (35'; 35'') is formed or arranged on an end face of the control disc (33; 33'; 33").

4. The cable stripping tool (100) according to at least one of the preceding claims, **characterized in that** two diametrically opposed control faces (34; 34'; 34") and/or in each case two diametrically opposed blocking segments (35) are formed on the control disc (33; 33'; 33").

5. Cable stripping tool (100) according to at least one of the preceding claims, **characterized in that** the control face (34) is delimited on either side by a radial delimiting edge (35.1) of a blocking segment (35), raised relative to the control face (34).

6. Cable stripping tool (100) according to one of Claims 1 to 5, **characterized in that** the form-fitting element (35') on the control disc (33') is a depression.

7. Cable stripping tool (100) according to one of Claims 1 to 5, **characterized in that** the form-fitting element (35") on the control disc (33'') is an elevation.

8. Cable stripping tool (100) according to one of Claims 1 to 7, **characterized**
- **in that** the feeler element (46) is arranged displaceably in the housing (10) at least in a spiral cut, and
- **in that** the feeler element (46) is prestressed via at least one spring element (44) and the feeler surface (47) of the feeler element rests against the control face (34; 34'; 34").

9. Cable stripping tool (100) according to Claim 8, **characterized in that** the spring element (44) of the feeler element (46) is a compression spring which is supported on a spring base element (43) which is arranged displaceably in the housing (10).

10. Cable stripping tool (100) according to Claim 9, **characterized in that** the spring base element (43) is displaceable into the spiral cut position by means of an eccentric element (42) rotatable from outside the housing (10).

11. Cable stripping tool (100) according to one of Claims 6 to 10, **characterized**
- **in that** the feeler element (46) is laterally rounded and/or bevelled with a chamfer at its feeler surface (47), and
- **in that** the rounding radius and/or the height of the chamfer is greater than the height of the delimiting edge (35.1) formed between the blocking segment (35) and the adjacent control face (34; 34'; 34").

12. Cable stripping tool (100) according to one of the preceding claims, **characterized in that** the cutter element (30; 30'; 30'') is formed from a round wire, wherein the cutter head is formed by a double-angled portion, at the end of which the ground round wire forms a cutter blade (31).

13. Cable stripping tool (100) according to one of the preceding claims, **characterized in that** a cutter adjustment unit (50) is provided, which comprises an adjusting wheel (51) protruding from the housing (10), which adjusting wheel is mounted rotatably in the housing (10) via a shaft (54) and is connected to a support element (52), on which the cutter element (30) is supported, wherein the adjusting wheel (51) has one or more trough-like depressions (57), into which a detent element (55) spring-mounted in the housing (10) engages.

## Revendications

1. Outil de dénudage de câbles (100) avec au moins :
- un boîtier (10) dans lequel est agencé un élément de coupe (30 ; 30' ; 30"), lequel fait saillie avec une tête de coupe avec une lame de coupe (31) hors d'une tête de boîtier (11) du boîtier (10) et est monté de manière rotative dans le boîtier (10) ; la lame de coupe (31) étant agencée de manière excentrique par rapport à l'axe de rotation de l'élément de coupe (30 ; 30' ; 30") et étant mobile de manière pendulaire autour de l'axe de rotation ;
- un étrier de retenue de câble (20) qui est monté de manière coulissante dans le boîtier (10) et qui s'étend au-delà de la tête (11) du boîtier (10) avec la tête de coupe, un passage de câble (25) entourant au moins partiellement le câble à traiter (1) étant réalisé entre l'étrier de retenue de câble (20) et la tête de boîtier (11),
où :
- l'élément de coupe (30 ; 30' ; 30) est relié de manière fixe à un disque de commande (33 ; 33' ; 33") pouvant tourner dans le boîtier (10) et
- un mouvement pendulaire de la tête de coupe montée de manière pendulaire avec la lame de coupe (31) par rapport au passage de câble (25) peut être commuté par l'intermédiaire d'une unité de commande de coupe entre un mouvement pendulaire libre permettant une coupe longitudinale et circulaire et une plage d'angle pendulaire limitée pour effectuer une coupe en spirale,
- la plage d'angle pendulaire peut être réglée et/ou délimitée par l'intermédiaire d'au moins un élément de liaison par complémentarité de forme sur le boîtier (10) et sur ou au niveau du disque de commande (33 ; 33' ; 33"), lesquels éléments de liaison par complémentarité de forme devant être mis en prise les uns avec les autres ou en appui les uns contre les autres,
**caractérisé**
- **en ce qu'**au moins un élément de touche (46) est prévu en tant qu'élément de liaison par complémentarité de forme dans le boîtier (10), lequel élément de touche entrant en contact avec le disque de commande (33 ; 33' ; 33") et
- **en ce qu'**au moins deux éléments de liaison par complémentarité de forme (35' ; 35'') ou arêtes de délimitation (35.1) espacés l'un de l'autre sont prévus sur ou au niveau du disque de commande (33 ; 33' ; 33"), entre lesquels est réalisée une surface de commande (34 ; 34' ; 34") en forme de secteur pouvant être balayée par l'élément de touche (46).

2. Outil de dénudage de câbles (100) selon la revendication 1, **caractérisé en ce qu'**au moins un élément de liaison par complémentarité de forme est réalisé sur la circonférence extérieure du disque de commande (33 ; 33' ; 33").

3. Outil de dénudage de câbles (100) selon la revendication 1 ou 2, **caractérisé en ce qu'**au moins un élément de liaison par complémentarité de forme (35' ; 35'') est réalisé ou agencé sur une surface frontale du disque de commande (33 ; 33' ; 33'').

4. Outil de dénudage de câbles (100) selon au moins l'une quelconque des revendications précédentes, **caractérisé en ce que** deux surfaces de commande (34 ; 34' ; 34") diamétralement opposées et/ou deux segments de blocage (35) diamétralement opposés sont réalisés sur le disque de commande (33 ; 33' ; 33").

5. Outil de dénudage de câbles (100) selon au moins l'une quelconque des revendications précédentes, **caractérisé en ce que** la surface de commande (34) est délimitée des deux côtés par un bord de délimitation radial (35.1) d'un segment de blocage (35) qui est surélevé par rapport à la surface de commande (34).

6. Outil de dénudage de câbles (100) selon l'une quelconque des revendications 1 à 5, **caractérisé en ce que** l'élément de liaison par complémentarité de forme (35') sur le disque de commande (33') est un renfoncement.

7. Outil de dénudage de câbles (100) selon l'une quelconque des revendications 1 à 5, **caractérisé en ce que** l'élément de liaison par complémentarité de forme (35') sur le disque de commande (33') est une surélévation.

8. Outil de dénudage de câbles (100) selon l'une quelconque des revendications 1 à 7, **caractérisé**
- **en ce que** l'élément de touche (46) est agencé dans le boîtier (10) de manière à pouvoir coulisser au moins dans une position de coupe en spirale et
- **en ce que** l'élément de touche (46) est précontraint par l'intermédiaire d'au moins un élément à ressort (44) et sa surface de touche (47) est appliquée contre la surface de commande (34 ; 34' ; 34'').

9. Outil de dénudage de câbles (100) selon la revendication 8, **caractérisé en ce que** l'élément à ressort (44) de l'élément de touche (46) est un ressort de pression qui s'appuie sur un élément de base de ressort (43) agencé de manière coulissante dans le boîtier (10).

10. Outil de dénudage de câbles (100) selon la revendication 9, **caractérisé en ce que** l'élément de base de ressort (43) peut être déplacé dans la position de coupe en spirale au moyen d'un élément excentrique (42) pouvant être tourné depuis l'extérieur du boîtier (10).

11. Outil de dénudage de câbles (100) selon l'une quelconque des revendications 6 à 10, **caractérisé**
- **en ce que** l'élément de touche (46) est arrondi latéralement au niveau de sa surface de touche (47) et/ou biseauté avec un chanfrein, et
- **en ce que** le rayon d'arrondi et/ou la hauteur du chanfrein sont supérieurs à la hauteur du bord de délimitation (35.1) réalisé entre le segment de blocage (35) et la surface de commande adjacente (34 ; 34' ; 34").

12. Outil de dénudage de câbles (100) selon l'une quelconque des revendications précédentes, **caractérisé en ce que** l'élément de coupe (30 ; 30' ; 30") est formé d'un fil rond, la tête de coupe étant formée par une section à double coude à l'extrémité de laquelle le fil rond affûté réalise une lame de coupe (31).

13. Outil de dénudage de câbles (100) selon l'une quelconque des revendications précédentes, **caractérisé en ce qu'**il est prévu une unité de réglage de coupe (50) qui comprend une molette de réglage (51) dépassant du boîtier (10), qui est montée de manière rotative dans le boîtier (10) par l'intermédiaire d'un axe (54) et qui est reliée à un élément d'appui (52) sur lequel s'appuie l'élément de coupe (30), la molette de réglage (51) présentant un ou plusieurs renfoncements de type auge (57) dans lesquels s'enclenche un élément d'encliquetage (55) monté à ressort dans le boîtier (10).
